# EUROPÄISCHE PATENTSCHRIFT

(11) **EP 0 340 686 B1**
(45) Veröffentlichungstag und Bekanntmachung des Hinweises auf die Patenterteilung: **17.03.1993**
(21) Anmeldenummer: 89107809.9
(22) Anmeldetag: 28.04.1989
(51) Int. Cl.: H02P 7/62

(54) **Ansteuereinrichtung für einen elektromotorischen Antrieb**
Drive device for an electromotive actuator
Appareil d'attaque pour un électromoteur

(30) Priorität: 02.05.1988 DE 3814867
(43) Veröffentlichungstag der Anmeldung: 08.11.1989
(73) Patentinhaber: Magnet-Motor Gesellschaft für magnetmotorische Technik mbH, D-82319 Starnberg (DE)
(72) Erfinder: Heidelberg, Götz, Dipl.-Phys., D-8136 Starnberg-Percha (DE); Gründl, Andreas, Dr., D-8000 München 70 (DE); Ehrhart, Peter, Dr., D-München 70 (DE)
(74) Vertreter: Klunker . Schmitt-Nilson . Hirsch

(56) Entgegenhaltungen:
- DE-A- 3 345 271

## Beschreibung

Die Erfindung betrifft eine Ansteuereinrichtung für einen elektromotorischen Antrieb nach dem Oberbegriff des Anspruchs 1.

Solche Ansteuereinrichtungen kommen vornehmlich in elektrischen Drehmotoren, aber auch in Linearmotoren zum Einsatz. Dabei kann es sich sowohl um Elektromotoren mit permanentmagnetischer Erregung als auch um Motoren mit Erregerwicklung handeln.

Insbesondere im Hinblick auf die jeweilige Motorleistung wurde bereits vorgeschlagen, in Elektromotoren Gruppen von Spuleneinheiten oder Spulen vorzusehen, um bei Bedarf eine Teilmenge von Spuleneinheiten mit Strom zu speisen oder einzelne Spuleneinheiten in Serie oder parallel zu schalten. Die Vier-Quadranten-Wechselrichter bei solchen Ansteuereinrichtungen bestehen in der Regel aus Thyristorelementen, deren Steuerelektroden von einer Steuerschaltung angesteuert werden. Ein vier Thyristorelemente aufweisender Vier-Quadranten-Wechselrichter kann so angesteuert werden, daß der Strom die Spuleneinheit in die eine oder die andere Richtung durchfließt.

Ein sich praktisch immer wieder stellendes Problem ist das Problem der Optimierung des Wirkungsgrads des elektromotorischen Antriebs. Hierbei ist es wünscheswert, eine möglichst flexible Ansteuereinrichtung zur Verfügung zu haben, die es ermöglicht, die Spuleneinheiten in vielfältiger Weise mit Strom zu speisen.

Im Normalfall bildet jede Spuleneinheit mit einem zugehörigen Wechselrichter einen Lastkreis, wobei der vorzugsweise aus Thryistorelementen bestehende Wechselrichter elektrischen Strom mit der erforderlichen Frequenz und Amplitude in die Spulen einzuspeisen vermag.

Die DE 33 45 271 A1 zeigt eine Ansteuereinrichtung der eingangs genannten Art, bei der die Schaltvorrichtung als Zusatzstromrichtereinrichtung ausgebildet ist, welche mehrere Thyristoren enthält. Bei zwei Spuleneinheiten besteht ein Umrichter aus vier Thyristoren in Brückenschaltung, und wenn die zwei Spuleneinheiten in Serie geschaltet werden, so sind in dem einem Umrichter die an negatives Potential angeschalteten Thyristoren und in dem anderen Umrichter die an positives Potential angeschalteten Thyristoren stets sperrend, während ein als Gruppenschalter fungierender Thyristor (Zusatzstromrichter) leitet.

Der Spannungsabfall an dem Halbleiterelement (Thyristor) ist naturgemäß hoch und verringert den Wirkungsgrad.

Der Erfindung liegt die Aufgabe zugrunde, eine Ansteuereinrichtung der eingangs genannten Art zu schaffen, die es bei hohem Wirkungsgrad ermöglicht, die einzelnen Spuleneinheiten einer Gesamtheit von n Spuleneinheiten sowohl individuell als Bestandteile einzelner Lastkreise als auch in Form von Gruppen, in denen mehrere Spuleneinheiten Bestandteil ein und desselben Lastkreises sind, zu schalten.

Diese Aufgabe wird durch die im Anspruch 1 angegebene Erfindung gelöst. Vorteilhafte Weiterbildungen ergeben sich aus den Unteransprüchen.

Während bei früher üblichen Ansteuereinrichtungen beispielsweise jeder Spuleneinheit ein einzelner Vier-Quadranten-Wechselrichter zugeordnet war, der ein einheitliches Element bildete, werden die einzelnen Vier-Quadranten-Wechselrichter jeweils in zwei Halbbrücken unterteilt, wobei zusätzlich eine von einer Steuerung ansteuerbare Schaltvorrichtung dazu dient, jeweils zwei Halbbrücken mit einer Spuleneinheit oder mit mehreren, zu einer oder mehreren Gruppen aus in Serie geschalteten Spuleneinheiten zu insgesamt einem oder mehreren Vollbrücken-Lastkreisen zu verbinden. Man kann mehrere Spuleneinheiten durch Gruppenschalter in Serie schalten, z.B. durch Relaisschalter, die zwischen benachbarten Spuleneinheiten geschaltet sind. Liegen zwischen sämtlichen Spuleneinheiten solche Gruppenschalter, so lassen sich sämtliche Spuleneinheiten in Serie schalten.

Jede Spuleneinheit ist über zwei separat betätigbare Trennschalter mit einem zugehörigen Umrichter, der zwei Halbbrücken umfaßt, zu einem geschlossenen Vollbrücken-Lastkreis verschaltbar. In bestimmten Verschaltungsarten der Gruppenschalter lassen sich somit in Anpassung an die gegeben Verhältnisse gewünschte Gruppen bilden, zum Beispiel Spuleneinheit-Gruppen aus n/2, n/3 ... Spuleneinheiten. Sind zum Beispiel jeweils zwei benachbarte Spuleneinheiten durch Schließen des sie verbindenden Gruppenschalters in Serie geschaltet, so wird der erste Anschluß der ersten Spuleneinheit über einen Trennschalter mit der ersten Halbbrücke des zu der ersten Spuleneinheit gehörenden Umrichters verbunden, während der zweite Anschluß der zweiten Spuleneinheit über einen weiteren Trennschalter mit der zweiten Halbbrücke des zu der zweiten Spuleneinheit gehörenden Umrichters verbunden wird. Durch Öffnen der dazwischenliegenden Trennschalter werden somit die beiden nicht benötigten inneren Halbbrücken der beiden Umrichter weggeschaltet. Die Steuerung wird in diesem Fall die Thyristoreinheiten der nicht für den Betrieb benötigten Halbbrücken nicht ansteuern, und von jeder Versorgung abkoppeln. Je nach Anzahl der in Reihe geschalteten Spulen kann diese Konfiguration auch mehrmals realisiert werden.

Die Spuleneinheiten, die im Normalfall aus jeweils einer einzigen Spule bestehen, sind phasengleich oder besitzen nicht zu große Phasendifferenzwinkel. Im Extremfall sind sämtliche n Spuleneinheiten in Serie geschaltet, wobei lediglich die eingangsseitige und die ausgangsseitige Halbbrücke angesteuert werden, während die übrigen Halbbrücken stromlos bleiben und von jeder Versorgung abgekoppelt sind. Hierdurch ergibt sich im Vergleich zu herkömmlichen Schaltungen eine Steigerung des Wirkungsgrads, Durch die Serienschaltung mehrerer Spuleneinheiten läßt sich eine höhere induzierte Spannung erzielen als in mehreren Einzelspulen, d.h. eine Spannungsanpassung an die Drehzahl realisieren. Wegen der höheren Induktivität werden die di/dt-abhängigen Verluste verringert. Dabei erfolgt eine optimale Anpassung der aus jeweils zwei Halbbrücken bestehenden Umrichter an die geforderte Leistung, was damit auch die Wechselrichter optimal ausnützt und sowohl deren Einzelwirkungsgrad als auch den Gesamtwirkungsgrad der Anlage steigert.

Die Trennschalter, die die einzelnen Umrichter mit den Spuleneinheiten verbinden, können bei Bedarf auch als Abtrennrelais mit dem Zweck verwendet werden, einzelne Spuleneinheiten und dazugehörige Umrichter im Fall einer Störung abzutrennen.

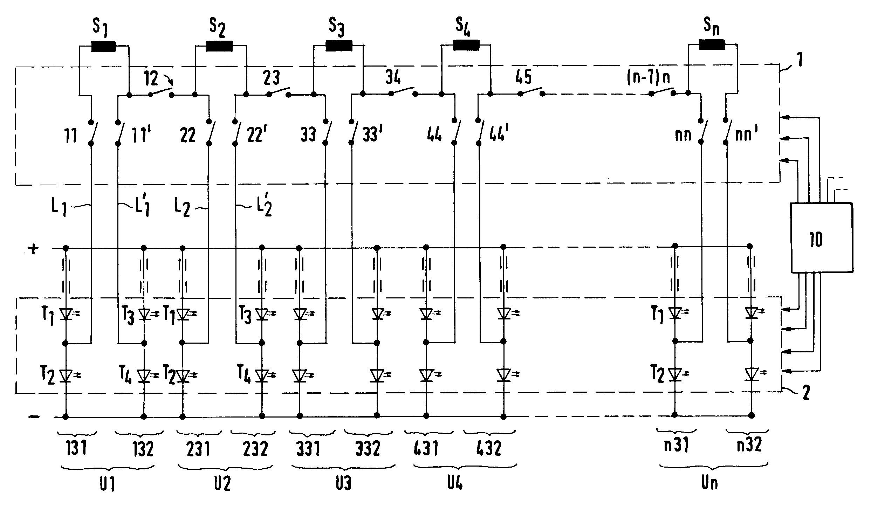

Im folgenden wird ein Ausführungsbeispiel der Erfindung anhand der Zeichnung näher erläutert.

Die einzige Figur zeigt eine Schaltungsskizze einer Ansteuereinrichtung für eine Gruppe von n Spuleneinheiten eines elektrischen Drehmotors.

Ein elektrischer Drehmotor, zum Beispiel ein Drehmotor mit permanentmagnetischer Erregung, besitzt mehrere Gruppen von jeweils n Spuleneinheiten. In der Zeichnung besteht jede Spuleneinheit aus einer Einzelspule S1, S2, S3, S4 ...Sn.

Über eine unten noch näher zu beschreibende Schaltvorrichtung 1 werden die Spulen S1 - Sn unter Steuerung durch eine hier nicht näher interessierende Steuerschaltung 10 individuell mit den zugehörigen Umrichtern U1, U2, U3, U4 ... Un einer Umrichteranordnung 2 zu einem Lastkreis verschaltet, oder sie werden zu einer Gruppe oder zu mehreren Teilgruppen geschaltet, wobei nur Teile einzelner Umrichter U1, U2 ..., d.h. Halbbrücken, aktiv sind.

Die Umrichter U1 - Un der Umrichteranordnung 2 bestehen aus jeweils vier Thyristorelementen T1, T2, T3 und T4, die in bekannter Weise zwischen dem Pluspol und dem Minuspol einer Versorgungsspannungsquelle geschaltet sind und derart von der Steuerschaltung 10 angesteuert werden, daß der Strom in die eine oder die andere Richtung durch die zugehörige Spule S1, S2 ... fließt.

Im dargestellten, im Betrieb jedoch nicht vorkommenden Fall sind innerhalb der Schaltvorrichtung 1 sämtliche Schalter geöffnet. Es sind Gruppenschalter und Trennschalter vorgesehen.

Gruppenschalter sind hier durch mechanisch oder Halbleiter-Relais gebildete Schalter 12, 23, 34, 45 ... (n-1)n, die jeweils benachbarte Spulen S1, S2 ... verbinden. Der Gruppenschalter 12 verbindet zum Beispiel die Spulen S1 und S2, so daß diese beiden Spulen in Serie geschaltet sind.

Die beiden Anschlüsse jeder Spule sind über Leitungen L1 und L1′ in an sich bekannter Weise mit den Verbindungspunkten zwischen jeweils zwei Thyristorelementen T1, T2 bzw. T3, T4 verbunden. Erfindungsgemäß liegt in jeder Anschlußleitung L1, L1′ ein Trennschalter 11 bzw. 11′, die ebenfalls als Relaisschalter ausgebildet sind, jedoch auch Halbleiterschalter sein können.

Zu der Spule S2 gehören Trennschalter 22, 22′, um die Spule S2 über die Leitungen L2, L2′ mit dem zugehörigen Umrichter U2 zu verbinden.

In der Zeichnung hängen die Bezugszeichen für die Trennschalter von der zugehörigen Spule ab.

Sämtliche Trennschalter 11, 11′, 22, 22′, 33 ... sowie Gruppenschalter 12, 23, 34 ... innerhalb der Schaltvorrichtung 1 sind von der Steuerschaltung 10 individuell betätigbar.

Die Umrichter U1 - Un sind jeweils identisch ausgebildet. Sie werden individuell von der Steuerschaltung 10 angesteuert. Jeder Umrichter ist hier aufgrund des Vorhandenseins der Schaltvorrichtung 1 in zwei Halbbrücken unterteilt. So zum Beispiel umfaßt der Umrichter U1 zwei Halbbrücken 131, 132, der Umrichter U2 umfaßt zwei Halbbrücken 231, 232, ... und der Umrichter Un umfaßt zwei Halbbrücken n31 und n32 .

Es sind beispielsweise folgende Schaltungskonfigurationen der Ansteuervorrichtung möglich:

Wenn sämtliche Gruppenschalter 12, 23 ... (n-1)n der Schaltvorrichtung 1 geöffnet und sämtliche Trennschalter 11, 11′, 22, 22′ ... geschlossen sind, werden die Spulen S1 - Sn von dem jeweils zugehörigen Frequenzumrichter U1 - Un individuell angesteuert.

Im anderen Extremfall sind sämtliche Gruppenschalter 12, 23 ... (n-1)n geschlossen, und von den Trennschaltern sind lediglich die Trennschalter 11 und nn′ geschlossen während die übrigen Trennschalter 11′ bis nn geöffnet sind. Damit sind sämtliche Spulen S1 bis Sn in Reihe geschaltet, und die Ansteuerung und damit Strombeaufschlagung erfolgt lediglich über die beiden äußeren Halbbrücken 131 des Umrichters U1 und n32 des Umrichters Un. Die übrigen Halbbrücken 132 bis n31 bleiben stromlos und sind vorzugsweise von jeder Versorgung abgekoppelt.

Man kann auch jeweils zwei oder drei oder mehr Spulen zu Teilgruppen verbinden. Um einen Teilgruppe von zwei Spulen zu bilden, werden zum Beispiel die beiden Spulen S1 und S2 in Reihe geschalteter, ebenso können weitere Paare von Spulen in Reihe geschaltet werden. Dazu wird in dem ersten Spulenpaar S1, S2 der Gruppenschalter 12 geschlossen, während die Trennschalter 11 und 22′ ebenfalls gegeschlossen werden, die Trennschalter 11′ und 22 hingegen geöffnet werden. Zur Ansteuerung der Serienschaltung S1 mit S2 dienen die beiden Halbbrücken 131 und 232, während die beiden Halbbrücken 132 und 231 stromlos bleiben und von jeder Versorgung abgekoppelt werden.

## Patentansprüche

1. Ansteuereinrichtung für einen n oder ein Vielfaches von n Spuleneinheiten (S1 - Sn) aufweisenden elektromotorischen Antrieb, mit für jeweils n Spuleneinheiten (S1 - Sn) vorgesehenen n Umrichtern, die vorzugsweise jeweils als Vier-Quadranten-Wechselrichter (Un) ausgebildet sind, und mit einer Schaltvorrichtung (1), die die Umrichter (U1 - Un) jeweils in Form von zwei Halbbrücken (131, 132; 231, 232; 331 ...) und mehrere Halbbrücken mit verschiedenen Spuleneinheiten (S1 - Sn) jeweils so zu verschalten vermag, daß ein geschlossener Lastkreis entsteht, wobei
die Spuleneinheiten (S1 - Sn) durch Gruppenschalter (12, 23, 34 .. (n - 1)n) in Serie zu einer Gruppe oder mehreren Gruppen schaltbar sind dadurch gekennzeichnet, daß jede Gruppe von Spuleneinheiten über zwei separat betätigbare Trennschalter (11, 11′; 22, 22′ ...) mit einem zugehörigen, zwei Halbbrücken (131, 132; 231, 232 ...) umfassenden Umrichter (U1, U2 ...) zu einem geschlossenen Lastkreis verschaltbar ist.

2. Schaltung nach Anspruch 1,
dadurch gekennzeichnet, daß jede Spuleneinheit aus einer Einzelspule (S1 - Sn) besteht.

3. Schaltung nach Anspruch 1,
dadurch gekennzeichnet,
daß jede Spuleneinheit aus mehreren Einzelspulen besteht.

4. Schaltung nach einem der Ansprüche 1 bis 3,
dadurch gekennzeichnet,
daß nicht in einem Lastkreis geschaltete Halbbrücken stromlos bleiben und vorzugsweise von jeder Versorgung abgetrennt sind.

## Claims

1. A drive means for an electromotive drive having n or a plurality of n coil units (S1 - Sn), comprising n converters provided for n coil units (S1 - Sn) each and being preferably in the form of a four quadrant controller (Un) each, and comprising a switching device (1) capable of connecting the converters (U1 - Un) in the form of two half bridges (131, 132; 231, 232; 331 ...) each and a plurality of half bridges to different coil units (S1 - Sn) each, in such a manner that a closed load circuit is formed, the coil units (S1 - Sn) being adapted to be connected in series by means of group switches (12, 23, 34 ...(n-1)n) so as to form one group or a plurality of groups,
characterized in that each group of coil units is adapted to be connected, via two separately actuatable separating switches (11, 11'; 22, 22' ...), to an associated converter (U1, U2 ...) comprising two half bridges (131, 132; 231, 232 ...) so as to form a closed load circuit.

2. A circuit according to claim 1,
characterized in that each coil unit consists of an individual coil (S1 - Sn).

3. A circuit according to claim 1,
characterized in that each coil unit consists of a plurality of individual coils.

4. A circuit according to any one of claims 1 to 3,
characterized in that half bridges not connected in a load circuit remain without current and are preferably separated from any supply.

## Revendications

1. Dispositif de commande pour un entrainement à moteur électrique comportant n ou un multiple de n unités de bobines (S1 à Sn), avec n inverseurs prévus pour n unités de bobines (S1 à Sn), lesquels inverseurs sont conçus de préférence sous la forme d'onduleurs à quatre quadrants (Un), et avec un dispositif de commutation (1) qui peut monter les inverseurs (U1 à Un), chacun sous la forme de deux demi-ponts (131,132;231,232;331,...), et plusieurs demi-ponts avec différentes unités de bobines (S1 à Sn), de manière qu'il se forme un circuit de charge fermé, dans lequel les unités de bobines (S1 à Sn) peuvent être montées en série par des interrupteurs de groupe (12,23,34...(n - 1)n) pour former un groupe ou plusieurs groupes, caractérisé en ce chaque groupe d'unités de bobines peut être monté, par deux sectionneurs (11,11';22,22'...), actionnables séparément, avec un inverseur (U1,U2...) correspondant, comportant deux demi-ponts (131,132;231,232...), pour former un circuit de charge fermé.

2. Circuit selon la revendication 1, caractérisé en ce que chaque unité de bobine est constituée d'une bobine individuelle (S1 à Sn).

3. Circuit selon la revendication 1, caractérisé en ce que chaque unité de bobines est constituée des plusieurs bobines individuelles.

4. Circuit selon l'une des revendications 1 à 3, caractérisé en ce que les demi-ponts, non montés dans un circuit de charge, restent hors tension et sont de préférence séparés de toute alimentation.
